# EUROPEAN PATENT APPLICATION

(11) **EP 1 197 979 A1**
(43) Date of publication of application: **17.04.2002**
(21) Application number: 01903787.8
(22) Date of filing: 06.02.2001
(51) Int. Cl.: H01H 13/24, H01H 7/03, H04N 9/29

(54) **IMPROVEMENTS TO THE SUBJECT MATTER OF PATENT NO. 9802346 BY ON-OFF MAINS SWITCH FOR TELEVISION SET WITH DEGAUSSING DISCONNECTION**

(30) Priority: 19.04.2000 ES 200001025
(71) Applicant: Gestion Desarrollos Electronicos, S.A., 08320 El Masnou (ES)
(72) Inventor: VESPERINAS ROY, Antonio, E-08320 El Masnou (ES)
(74) Representative: Morgades Manonelles, Juan Antonio
(86) International application number: ES0100026
(87) International publication number: WO0180261

(57) **Abstract**

The power switch (1) controls the power supply to the CRT of a TV or the like and to the degaussing circuits surrounding said CRT by means of an ancillary switch module (4) actuated by a pusher (3); a PTC thermistor (5); and delay means of said ancillary switch (4) comprising a sliding cylinder (8) at the interior (19) of which there is provided a piston rod (20) secured to said ancillary switch (4) which is provided with intake and outlet grooves (24, 23) causing said cylinder (8) to be moved backwards at a speed slower than the forward speed. The piston rod (20) is provided with an O-ring (26) having a small longitudinal play (e) allowing air flow through the inlet groove (24) during movement of the cylinder (8).

## Description

The present patent application relates, as stated in its title, to "IMPROVEMENTS IN POWER SWITCHES FOR TELEVISION WITH DEGAUSSING POWER-OFF" which novel manufacturing, conformation and design features fulfil the purpose to which it has been specifically conceived, with a maximum safety and effectiveness.

In the Spanish patent application No. 9802346 there is disclosed a power switch for televisions, monitors and visual display devices in general which is further provided with an additional module working as an ancillary switch for opening the degaussing circuit in the device.

The image tube used in the television devices and other similar devices is usually an electromagnetic flection cathode ray tube. The cathode ray tube essentially comprises an electron gun capable to create a thin electron beam; a deflecting system and a screen that is covered by a thin layer of a luminescent substance. The deflecting system, which may be either of an electrostatic or magnetic nature, is intended to deflect the electron beam created in the tube directing on a luminescent screen thus producing visual images. Regardless of the nature of the deflecting system, it comprises two pair of deflecting plates: a first pair to carry out a vertical deflection and a second pair to carry out a horizontal deflection. Therefore, the combined deflecting system can direct the beam towards any point in the screen and even it is able to carry out a periodic scan of the entire surface thereof. The cathode ray tubes, besides of being used as oscilloscopes, are the basis of the television receiver device.

The flection unit or gun located at the rear part works by means of an electronic ray system provided with fast heating cathodes which is surrounded by deflecting reels.

To compensate for any deviation in the gun due to magnetic fields present around the device, there is a degaussing circuit comprising a degaussing coil that is fitted at the rear part of the cathode ray tube and a PTC resistance. Such degaussing circuit serves the purpose of degaussing the image tube when the device is turned on by the main switch bringing it into optimum operating conditions and causing it to reset when turning on.

In this sense, it is understood that degaussing circuit transient is the time period from the turning-on in which intensity from 10 to 15 amperes is reached, until 300 ms later (equivalent to 15 full cycles of 50 Hz AC sine wave) in which intensity decreases in the order of milliamperes. This period of time is considered to be enough so that the coil degausses completely the cathode ray tube. The stationary term of the degaussing circuit corresponds to the rest of the elapsed time (over 300 ms) once degaussing of the rube has been finished. This time period includes the image and stand-by operation of the device.

The ancillary switch for turning off the degaussing circuit to which Spanish patent application No. 9802346 is referred is the switch trough which degaussing circuit turning off is carried out. Said ancillary switch is appropriately designed to open the circuit at least 300 ms after the power switch has turned the device on (at this time, intensity in the degaussing circuit is generally in the order of milliamperes). In other words, the ancillary switch carries out a delay of not less than 300 ms regardless of the speed of the switch activation by the user.

Delay of the ancillary switch can be performed, according to the above Spanish patent application, through mechanical means using the energy supplied by the user as he presses the main switch button to turn the device on. In this way, the ancillary switch fitted in the power switch is provided with mechanical means allowing delayed opening of the degaussing circuit when closing the main circuit. Such mechanical means comprise a combination of gear wheels which are firstly turning against the action of biasing means and they subsequently cause the opening of the degaussing circuit assisted by a feeler. It is to be pointed out that said means exploits the mechanical energy corresponding to the action of the user on the pusher of the power switch when he desires to turn the device on transmitting the force exerted trough a rack fitted in the pusher which moves against said biasing means to open the degaussing circuit.

The patent n° 9902414 that is also owned by the applicant provides improvements in said switch by including in the same structure of the power switch at least a PTC thermistor serving the purpose of controlling the power supply by modifying the intensity of the degaussing circuit of the device where the switch is fitted. Further improvements provided in said patent of the same applicant relies upon in the driving means of the movement of the pusher which comprise two integral gear wheels meshing with another gear wheel and a rack driven by the pusher of the switch against the biasing action of a twisting spring fitted in said gear wheels. Said rack is provided with a sliding pivot that is in contact with a cam surface to bring about the rack positioning in such a way that it becomes out of engagement from said first gear wheel in the backward path thereof.

The main object of the improvements regarding to what is has described above is provision of a delay mechanism for the actuation of the ancillary switch having a considerably simple and effective configuration either from a constructive or operational point of view.

The power switch of the present invention has been designed to enable or disable the power supply of a television or the like to the cathode ray tube and to the degaussing circuits surrounding said tube. This is carried out by means of an ancillary switch module fitted in the same power switch body that is actuated by a feeler being biased by the same pusher of said power switch. The ancillary switch module is provided with at least one PTC thermistor held between two contact lugs and it serves the purpose of controlling the power supply to the degaussing circuits of the device. As disclosed before, the ancillary switch module is provided with means for delaying the electric contact having a high mechanical simplicity, as disclosed hereafter.

Thus the main feature of the switch of the present invention is that said delay means comprise a sliding cylinder that is guided at one end of the power switch pusher and therefore it can slide inside the housing biased by a feeler that, in turn, is moved by the power switch pusher as it is actuated by the user. Inside of said cylinder there is provided a piston rod secured to the housing. Said piston rod is provided with an air outlet groove enabling movement of the cylinder relative to the piston rod as it is pushed by the feeler. The piston rod is also provided with an air intake groove that is smaller than said air outlet groove in order to cause said cylinder to move backwards slowly.

Using of air as a driving means involves many advantages, since the obtained power switch is notably simple to manufacture and moreover it is operatively effective as the number of parts thereof is reduced.

According to the invention, the cylinder of said delay means is guided at one end of the pusher and it slides by the action of said feeler. Guiding is carried out by means of a longitudinal protrusion running along a groove formed in the housing of the power switch module. The cylinder is moved relative to the secured piston rod which is provided with a radial groove to receive an O-ring intended to keep a continuous contact between said piston rod and the cylinder as they slide to one another. The O-ring is provided with a small longitudinal play in the piston rod, i.e., they can be slightly moved lengthways relative to the piston rod where it is fitted with the purpose to let air pass through the outlet groove during movement of the cylinder.

Furthermore, the cylinder is provided with a metal protrusion that, when contacting metal lugs as it approaches thereto by the feeler, it enables the current pass, which previously has passed through the switch contacts supplying the degaussing circuit coils.

According to another feature of the invention, the piston rod is provided an inner space where a pushing spring is accommodated. Said pushing spring biases the cylinder in the backwards movement thereof.

On the other hand, the switch pusher is provided with an upstanding protrusion inserted in a groove formed in a cylinder extension. Said cylinder extension allows the cylinder to be guided in such a way that as the pusher is actuated by the user, the feeler biases the cylinder causing it to be moved towards the PTC, and when it is released, the cylinder is moved backwards by the above mentioned pushing spring and the upstanding protrusion of the pusher pulling the cylinder backwards. Therefore, there is a double mechanism to move the cylinder backwards causing the cylinder to be moved to the starting position. Thus, the protrusion works in the case the spring does not cause the cylinder to be moved backwards properly, e.g. if the O-ring is damaged even this is not a probable case since the travel stroke of the cylinder is short and, in general, due to the small size of the parts in the switch that is being disclosed herein.

As mentioned before, the pusher is provided with a feeler pivotally fitted therein at one of its ends and, at the other end, it is in sliding contact in a recess having a number of inclined planes. Reading made by said feeler end in its travel trough said inclined planes determines the on/off positions of the power switch as the pusher is pressed and released by the user, said pushers acting on the cylinder and causing it to be moved as disclosed before.

With the improvements in the power switch with degaussing power-off as described the objects of the invention are thus achieved, providing a power switch having an ancillary switch with a notably simple configuration. Said ancillary switch enables opening the degaussing circuit in a delaying time of at least 300 ms after the power switch has turned the device on, said delaying time being irrespective of the switch speed of actuation by the user.

Further details and features of the present invention will be apparent from the following description, which refers to the accompanying drawings that schematically represent the preferred details. These details are given by way of example, which refer to a possible case of practical embodiment, but it is not limited to the disclosed details; therefore this description must be considered from an illustrating point of view and without any type of limitations.

In said drawings:

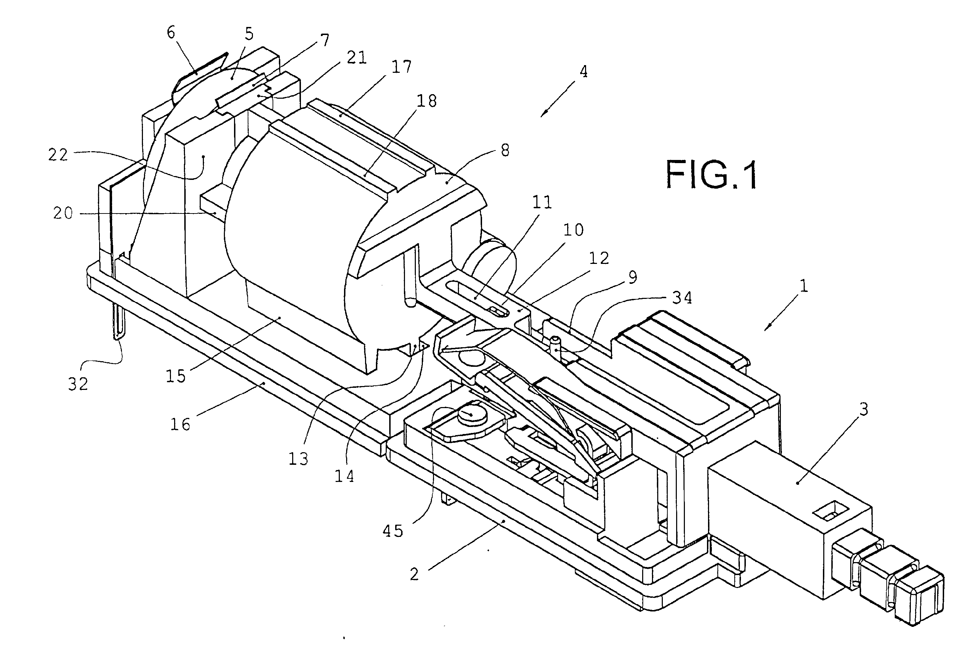

Figure n° 1 is a perspective view of a power switch with degaussing power-off which is shown without the closing cover so that parts therein can be clearly seen.
Figure n° 2 is a sectional plan view of the ancillary switch module along line X-X' in figure n° 3.
Figure n° 3 is a side elevational view of the switch in figure n° 1.
Figure n° 4 is a bottom plan view of the recess of the switch housing cover having a number of inclined planes on which one end of the feeler is moved to determine the on/off positions of the power switch as the pusher is pressed and released by the user.
Figures n° 5 and 6 are fragmentary enlarged views showing the movement of the cylinder relative to the piston rod as well as the respective positions of the O-ring relative to the piston rod.
And figure n° 7 is a diagrammatic view of the switch of the invention seen from the bottom illustrating the circuit diagram of the operation thereof.
A detailed list of the various parts cited in the present patent application is given below:
   (1) power switch;
   (2) base of the power switch;
   (3) pusher;
   (4) ancillary switch module;
   (5) PTC;
   (6) PTC lug;
   (7) PTC lug;
   (8) cylinder;
   (9) pusher end;
   (10) extension of the cylinder;
   (11) groove of the cylinder extension;
   (12) pusher protrusion;
   (13) lower longitudinal protrusion of the cylinder;
   (14) longitudinal groove of the base of the power switch;
   (15) cylinder support longitudinal protrusion;
   (16) base of the ancillary switch module;
   (17, 18) upper longitudinal protrusions of the cylinder;
   (19) cylinder interior;
   (20) piston rod;
   (21) cylinder connecting end;
   (22) vertical wall of the ancillary switch module;
   (23) outlet radial groove;
   (24) intake groove;
   (25) piston rod groove;
   (26) O-ring;
   (27) piston rod wall;
   (28) air flow way;
   (29) inner space of piston rod;
   (30) metal lug;
   (31) metal lug;
   (30a) pushing spring;
   (32) contact sheet;
   (33) metal protrusion of the cylinder;
   (34) feeler;
   (35) inner recess of the cover;
   (36, 37, 38) inclined planes of the inner recess of the cover;
   (39, 40, 41,42, 43) feeler positions at the inner recess of the cover;
   (44, 45, 46, 47) power switch contacts;
   (48) degaussing coil;
   (e) O-ring longitudinal play.

The power switch (1) of the present invention is intended to control the power supply to a television or the like to the cathode ray tube and to the degaussing circuits surrounding said tube. The switch (1) comprises a base (2) covered by a cover in a working position, said cover not being shown for the sake of clarity. The switch (1) is provided with a single pusher (3) which can slide longitudinally as it as actuated by the user.

The switch (1) is provided with an ancillary switch module generally designed by reference numeral (4) in the figures. It turns the television degaussing circuit off, opening the circuit at least 300 ms after the power switch (1) has turned the device on. It is carried out, as it can be disclosed below, by actuating a feeler (34) that is being biased by the pusher (3) of the power switch (1).

The ancillary switch module (4) is provided with a PTC thermistor (5) held between two contact lugs (6, 7) serving the purpose of controlling the power supply to the degaussing circuits of the device.

Opening of the degaussing circuit by the ancillary switch (4) with a minimum delay of 300 ms after the power switch (1) has turned the device on is carried out by means for delaying the electric contact comprising a sliding cylinder (8) guided at one end (9) of the pusher (3) of the power switch (1). More specifically, the cylinder (8) is provided with an extension (10) having a longitudinal groove (11) that slidably receives a protrusion (12) of the pusher (3).

The cylinder (8) has a longitudinal protrusion (13) located at the rear part thereof that is provided inside a guide groove (14) formed in the base (2) of the switch (1). A second longitudinal protrusion (15) acts as a guide and support of the cylinder (8) as it is sliding by the base (16) of the ancillary switch module (4) by means of the biasing force of said feeler (34). Guiding of the cylinder (8) through its sliding movement is ensured by a pair of upper longitudinal protrusions (17, 18) fitted in corresponding grooves in the cover (not shown) preventing the cylinder (8) from being rotated.

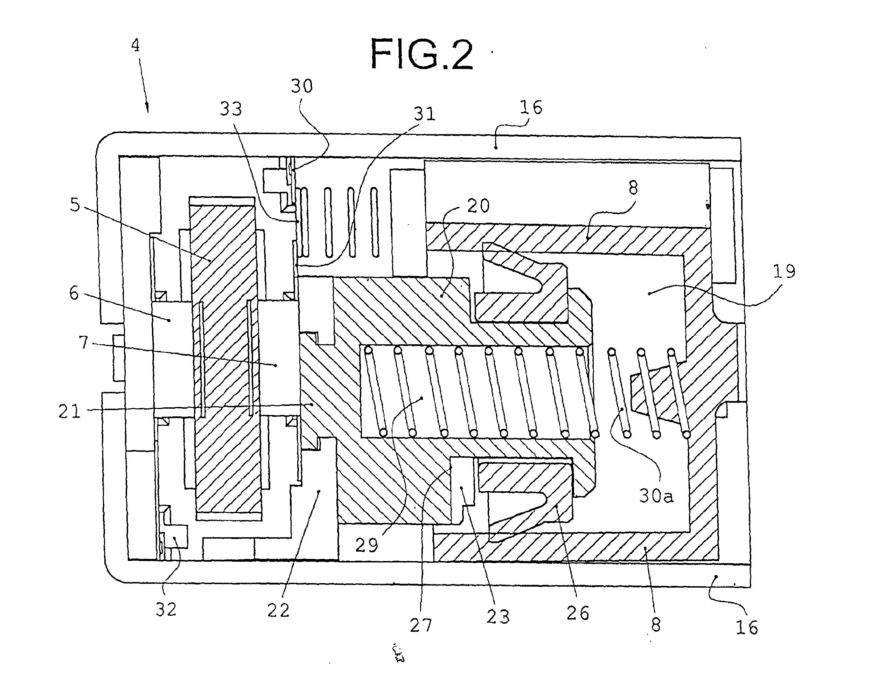

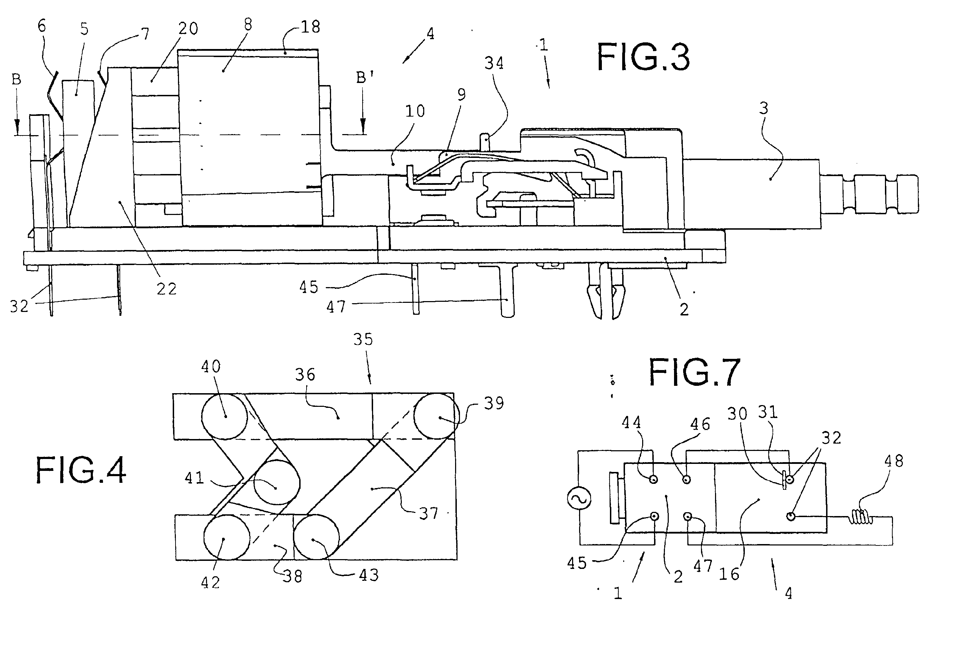

With regard to figures n° 2 and 3 of the drawings in the present specification, in the interior (19) of the cylinder (8) there is provided a piston rod (20) that is secured by the end (21), that is adjacent to the PTC (5), to a vertical wall (22) emerging from the base (16).

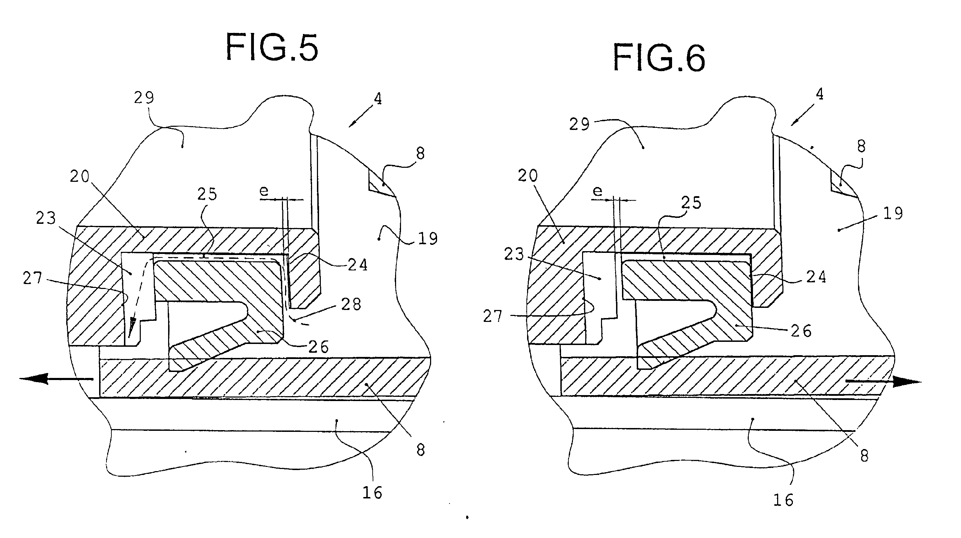

The piston rod (20) is provided by an air outlet radial groove (23) allowing sliding of the cylinder (8) relative to the piston rod (20) as it is biased by the feeler (34) on actuating the pusher (3). In order to make the backwards speed of the cylinder (8) is lower than the forward speed thereof, the piston rod (20) is provided with an air intake groove (24). Said grooves (23, 24) can be seen in figures n° 5 and 6. The intake groove (24) is smaller than the outlet groove (23). By way of an example, the outlet groove (23) may be 2 mm depth whilst the intake groove (24) may be 0,1 mm depth. Said values correspond to a cylinder stroke of 4 mm and they are a function of the degaussing circuit opening delay that is to be obtained. Delay for such values corresponds approximately to a delay higher that 300 ms that is enough so that PTC temperature has been stabilized and current flowing therethrough has minimum values allowing device degaussing.

The piston rod (20) has a radial groove (25) adapted to receive an O-ring (26). The O-ring (26) keeps continuous contact between the piston rod (20) and the cylinder (8) in their relative sliding thus ensuring air sealing of said parts. The O-ring (26) plays an important role in the air flow through grooves (23, 24). In this way, the O-ring (26) has a small longitudinal play (e) in the seat of the piston rod (20) caused by movement of cylinder (8) in the forward or backward movement thereof as it is biased by the feeler (34) of the switch (1). When the cylinder (8) is moved in a forward direction to the PTC (5), the O-ring is moved to the wall (27) of the radial groove (25) of the piston rod (20) that is in the position of figure n° 5, in which play (e) is at the right hand of said figure n° 5 allowing air flow therethrough and through the outlet groove (23) as indicated by arrow (28) in said figure n° 5.

The piston rod (20) has an inner space (29) to accommodate a pushing spring (30a) as shown in figure n° 2. The spring (30a) allows backwards movement of the cylinder (8) as the operator actuates the pusher (3) even though it is to be taken into account the fact that the cylinder (8) can be moved backwards by the action of the upstanding protrusion (12) of the pusher (3) that forces the extension (10) of the cylinder (8) to be moved backwards, moving it in said backwards movement. When this occurs, the O-ring (26) is disposed as shown in figure n° 6, wherein longitudinal play (e) is in the left hand of said figure and the air flows through the intake groove (24), such as to the cylinder (8) is moved backwards at a speed lower than the forward speed depending on the size ratio between grooves (23) and (24) respectively.

As the pusher is actuated, the contacts (44, 45, 46, 47) are closed and the cylinder (8) is moved on the base (16) biased by the feeler (34) causing electric contact of two metal lugs (30, 31) perpendicularly formed on said base (16). Said electric contact enables power supply to the lugs (6, 7) of the PTC (5) and contact sheets (32) to the coil (48) of the degaussing circuit, as it can be seen from figure n° 7. Contact of metal lugs (30, 31) extending down in one of the lugs (32) is carried out by a metal protrusion (33) formed in the cylinder (8) which, in a connecting position, is next to the lugs (30, 31) enabling power supply through the PTC (5) in the described manner.

Connections between contacts (44, 45, 46, 47) and the metal lugs (30, 31, 32) can be established at the base (2, 16) of the switch of the present invention in order to provide a compact assembly.

On/off positions of the pusher (3) in the power switch (1) are determined by the feeler (34) which is pivotally fitted by one end of the pusher (3) and, by the other end, it is in sliding contact in a recess (35) as shown in figure n° 4. Said recess (35) is formed in the inner part of the cover of the switch (1) and comprises a number of inclined planes (36, 37, 38).

Regarding said figure n° 4 of the drawings, the end of the feeler (34) is at the position (39) as the switch (1) is in the off position to slide in the inclined plane (35) to the stop (40) determining the interlocking point of the pusher (3) in the on position, which is established when the end of the pusher (34) is at the position (41). After a new actuation of the pusher (3) by the user, the feeler (34) starts from this position (41) to the position (42) sliding in the plane (38) to the off end position (43).

The described movements involve the corresponding sliding movement of the cylinder (8) relative to the piston rod (20) with the delay in the backwards movement relative to the forward movement thereof. As disclosed before, the piston rod (20) is biased by the feeler (34) through the pusher (3) exploiting the energy supplied by the user in the moment he actuates said pusher (3) fitted in the push button of the main switch (1) in the device concerned.

Once having been sufficiently described what the present patent application consists in accordance to the enclosed drawings, it is understood that any detail modification can be introduced as appropriate, provided that variations may alter the essence of the invention as summarised in the appended claims.

## Claims

1. "IMPROVEMENTS IN POWER SWITCHES FOR TELEVISION WITH DEGAUSSING POWER-OFF" said switch (1) being intended to enable or disable the power supply to the cathode ray tube of a television or the like and to the degaussing circuits surrounding said tube by means of an ancillary switch module (4) fitted in the same body of the power switch (1) that is actuated by a single pusher (3) and comprising at least a PTC thermistor (5) held between two contact lugs (6, 7) to control the power supply to the degaussing circuits of the device, and delay means for delaying the electric contact established by said pusher (3), said improvements being **characterised in that** said delay means comprise a sliding cylinder (8) that is guided at one end (9) of the pusher (3) at the interior (19) of which there is provided a piston rod (20) secured to the ancillary switch module (4) that is provided with an air intake groove (24) allowing the cylinder (8) to be moved relative to the piston rod (20) as it is biased by a feeler (34) actuated by the pusher (3) and an air intake groove (24) being smaller than said air outlet groove (23) in order to cause said cylinder (8) to move backwards at a slower speed.

2. "IMPROVEMENTS IN POWER SWITCHES FOR TELEVISION WITH DEGAUSSING POWER-OFF" as claimed in claim 1, **characterised in that** the piston rod (20) is provided with a radial groove (25) adapted to receive an O-ring (26) intended to keep continuous contact between said piston rod (20) and said cylinder (8) in their relative sliding, said O-ring (26) having a small longitudinal play (e) allowing air flow through the outlet groove (23) during movement of the cylinder (8).

3. "IMPROVEMENTS IN POWER SWITCHES FOR TELEVISION WITH DEGAUSSING POWER-OFF" as claimed in claim 1, **characterised in that** the cylinder (8) is provided with a metal protrusion (33) that on contacting metal lugs (30, 31) it enables the current pass from contacts (44, 45, 46, 47) of the switch (1) to contact sheets (32) supplying the coil (48) of the degaussing circuit.

4. "IMPROVEMENTS IN POWER SWITCHES FOR TELEVISION WITH DEGAUSSING POWER-OFF" as claimed in claim 1, **characterised in that** the piston rod (20) is provided with an inner space (29) where a pushing spring (30a) is accommodated, said pushing spring (30a) being intended to cause the cylinder (8) to slide in the backwards movement thereof.

5. "IMPROVEMENTS IN POWER SWITCHES FOR TELEVISION WITH DEGAUSSING POWER-OFF" as claimed in any of claims 1 or 4, **characterised in that** the pusher (1) is provided with an upstanding protrusion (12) inserted in a groove (11) formed in a extension (10) of the cylinder (8) in such a way that backwards movement is additionally carried out by the backwards movement of the pusher (3).

6. "IMPROVEMENTS IN POWER SWITCHES FOR TELEVISION WITH DEGAUSSING POWER-OFF" as claimed in claim 1, **characterised in that** the pusher (3) is provided with a feeler (34) pivotally fitted therein at one end and, at the other end, it is in sliding contact in a recess (35) having a number of inclined planes (36, 37, 38) establishing a travel (39, 40, 41, 42, 43) that determines the on/off positions of the power supply.
